# EUROPEAN PATENT SPECIFICATION

(11) **EP 2 992 600 B1**
(45) Date of publication and mention of the grant of the patent: **13.03.2019**
(21) Application number: 14721373.0
(22) Date of filing: 02.05.2014
(51) Int. Cl.: H02M 3/335, H02M 3/337

(54) **HIGH-EFFICIENCY PUSH-PULL POWER CONVERTER**
HOCHEFFIZIENTER PUSH-PULL-LEISTUNGSWANDLER
CONVERTISSEUR D'ÉNERGIE SYMÉTRIQUE À HAUT RENDEMENT

(30) Priority: 03.05.2013 IT BO20130199
(43) Date of publication of application: 09.03.2016
(73) Proprietor: Fioretti Energie S.r.l., 62017 Porto Recanati (MC) (IT)
(72) Inventor: FIORETTI, Giuseppe, I-62010 Montecorsaro (MC) (IT)
(74) Representative: Negrini, Elena
(86) International application number: PCT/EP2014/059016
(87) International publication number: WO 2014/177708

(56) References cited:
- EP-A2- 0 211 635
- DE-A1- 3 812 861
- JP-A- S6 412 864
- ROSSETTO L ET AL: "Quasi-resonant multi-output DC/DC converter with push-pull topology", PROCEEDINGS OF THE ANNUAL APPLIED POWER ELECTRONICS CONFERENCE AND EXPOSITION (APEC). ORLANDO, FEB. 13 - 17, 1994; [PROCEEDINGS OF THE ANNUAL APPLIED POWER ELECTRONICS CONFERENCE AND EXPOSITION (APEC)], NEW YORK, IEEE, US, vol. 2, 13 February 1994 (1994-02-13), pages 971-972, XP002255132,

## Description

### TECHNICAL FIELD

The present invention relates to the field concerning the electronic circuits for energy management and in particular it relates to a device for the generation of high energy efficiency.

### BACKGROUND ART

Document FR 2 829 314 discloses a power generating device comprising direct current electric accumulators means whose first and second terminals are connected via voltage limiting means to respective inputs of oscillator means having a plurality of outputs for periodic signals with respective phases regularly spaced in time domain; said device comprises a plurality of switch means each having a respective input port for the control signal connected to a respective output of the oscillator means, each of said switch means comprises a respective bipolar gate controlled in opening and closing by the signal of the input port and having a pole connected to the first terminal of the accumulator means and the other pole connected to a terminal of a respective primary inductance of a transformer means. The remaining terminal of each primary inductance is connected to the second terminal of the accumulator means. For each primary inductance the transformer means is provided with a corresponding secondary inductance where these inductances are magnetic flux connected through a magnetic circuit of the transformer means. The terminals of at least one of the secondary inductances are connected via a first rectifier means and a stabilizer means to the first and second poles of the accumulator means and the terminals of at least one of the secondary inductances are connected to a respective load.

Document DE 38 12 861 A1 (SIEMENS AG [DE]) 26 October 1989, discloses a power generating device comprising DC electric accumulators means whose first and second terminals are connected via voltage limiting means to respective inputs of oscillator means having a plurality of outputs for periodic signals with respective phases regularly spaced in time domain.

The non patent literature document XP002255132 ROSSETTO L ET AL: "Quasi-resonant multi-output DC/DC converter with push-pull topology", APEC 1994, ORLANDO, NEW YORK, IEEE, US, vol. 2, 13 February 1994, pages 971-972, disclose the connection of the terminals of at least one of the secondary inductances via a first rectifier means and a stabilizer means to a respective load.

### DISCLOSURE OF THE INVENTION

The object of the invention is to propose a device for the processing and regulation of electricity with high efficiency capable of recovering part of the energy fed into the device itself.

### BRIEF DESCRIPTION OF THE DRAWING

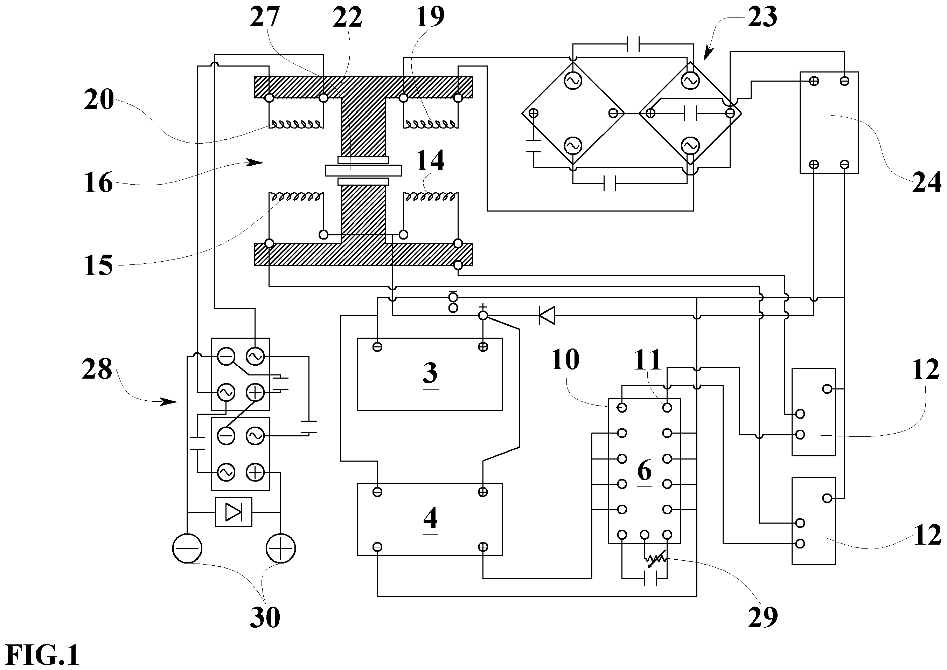

The characteristics of the invention are highlighted in the following with particular reference to figure 1, which illustrates a circuit diagram of the device object of the present invention.

### BEST MODE FOR CARRYING OUT THE INVENTION

The preferred embodiment of the device for the generation of high-efficiency energy comprises direct current electrical accumulators means 3, such as a series of batteries or accumulators the terminals of which, or the first and second poles are connected to respective inputs of the oscillator means 6 by means of voltage limiting means suitable to eliminate any voltage spikes.

The oscillator means 6 are provided with a plurality of outputs 10, 11 for periodic signals with respective phases regularly spaced in the time domain.

The device also includes a plurality of switching means 12, each of which has a respective input port to the control signal connected to a respective output 10, 11 of the oscillator means 6.

Each of said switch means 12 also comprises a respective bipolar gate opening and closing controlled by the signal to the input port and having a pole connected to the first terminal of the accumulators means 3 and the other pole connected to a terminal of a respective primary inductance 14, 15 of a transformer means 16. The remaining terminal of each primary inductance 14, 15 is connected to the second terminal of the accumulators means 3.

The transformer means 16 is provided, for each of the primary inductance 14, 15, with a corresponding secondary inductance 19, 20 where these inductances are in magnetic flow connection by means of a magnetic circuit 22 of the transformer means 16.

The terminals of one of the secondary inductances 19 are connected through a first rectifier means 23 and a stabilizer means 24 to the the first and second poles of the accumulators means 3.

The terminals of at least one of the secondary inductances 19 are connected to a respective load 30, i.e. to an user.

In detail it is noted that the magnetic circuit 22 is made by a stack of ferrous laminations, in other words ferrous sheets, or by one or more ferrite elements.

The magnetic circuit 22 has a winding branch for each pair of primary and secondary windings, a central branch and branches connecting the ends of the central branch and the winding branches where the central branch bears a magnetic gap occupied by a permanent magnet means 27.

An user secondary inductance 20 is connected to the respective load or user by a second rectifier means 28.

The second rectifier means 28 comprises a pair of diodes bridges with the inputs for the alternate voltage AC parallel connected to the terminals of the inductance and with the respective output poles connected in series where each input of a bridge is connected to an input of the other bridge by a respective capacitor and where the outputs of the upstream bridge are connected by a respective capacitor.

A secondary inductance 19 is connected to the alternate voltage inputs for the of a first diode bridge of the first rectifier means 23 connected by respective capacitors to the corresponding inputs of a second diode bridge of said first rectifier means 23 of where the poles of the latter second bridge are directly connected and by means of a capacitor to the opposite poles of the first bridge which are mutually connected by a capacitor to the respective inputs of the stabilizer means 24.

The capacitors of the first rectifier means 23 have about 2200 µF capacity, in other words the capacity of said capacitor can be in the range of 2200 µF ±.20%.

At least in correspondence of 12 volts accumulators means 3 , the primary windings have from 600 to 1200 turns, preferably 800 turns of copper wire having a diameter from 0.3 to 0.5 mm, preferably about 0.4 mm; while the secondary windings have from 700 to 1300 turns, preferably 1000 turns, and a diameter ranging from 0.1 to 0.3 mm, preferably about 0.2 mm.

The positive poles of the accumulator means 3 and of the stabilizer means 24 are connected by a diode that is polarized toward the accumulators means 3.

The oscillator means 6 are adjustable frequency type with and are equipped with organs for adjusting the frequency 29, preferably from 20 Hz to 950 Hz.

Variations of the preferred embodiment provide the use of multiple of 3 primary inductances 14, 15 or secondary 19, 20 resulting in a corresponding increase of the associated elements connected to them (at least the switches 12 and the rectifier means 23, 28).

Advantageously, the device object of the present invention allows a highly efficient management of the electrical energy.

The advantage of the invention is to provide a device for processing and regulation of electricity with high efficiency capable of recovering part of the energy fed into the device itself.

## Claims

1. Power generating device comprising direct current electric accumulators means (3) whose first and second terminals are connected via voltage limiting means (4) to respective inputs of oscillator means (6) having a plurality of outputs (10, 11) for periodic signals with respective phases regularly spaced in time domain; said device comprising a plurality of switch means (12) each having a respective input port for the control signal connected to a respective output (10, 11) of the oscillator means (6), each of said switch means (12) comprising a respective bipolar gate and being controlled in opening and closing by the signal at the input port and having a pole connected to the first terminal of the accumulator means (3) and the other pole connected to a terminal of a respective primary inductance (14, 15) of a transformer means (16), where the remaining terminal of each primary inductance (14, 15) is connected to the second terminal of the accumulator means (3); for each primary inductance (14, 15) the transformer means (16) is provided with a corresponding secondary inductance (19, 20) where these inductances are magnetic flux connected through a magnetic circuit (22) of the transformer means (16), the terminals of at least one of the secondary inductances (19) are connected via a first rectifier means (23) and a stabilizer means (24) to the first and second poles of the accumulator means (3) and the terminals of at least one of the secondary inductances (19) are connected to a respective load (30); said device being **characterized in that** the at least one secondary inductance (20) is connected to the respective load (30) via a second rectifier means (28) comprising a pair of diode bridges with the inputs for the AC voltage connected in parallel to the terminals of the secondary inductance (20) and with the respective output poles connected in series wherein each input of a bridge is connected to an input of the other bridge by a respective capacitor and where the outputs of the upstream bridge are connected by a respective capacitor.

2. Device according to claim 1 **characterized in that** the magnetic circuit (22) is made of a stack of ferrous sheet or of one or more ferrite elements.

3. Device according to claim 1 or claim 2 **characterized in that** the magnetic circuit (22) has winding arms for each pair of primary (14, 15) and secondary (19, 20) inductances, a central arm and connecting arms of the ends of the central arm and of the winding arms where the central arm bears a magnetic gap occupied by a permanent magnet means (27).

4. Device according to any of the previous claims **characterized in that** the at least one secondary inductance (19) is connected to the inputs for the AC voltage of a first diode bridge of the first rectifier means (23) connected via respective capacitors to the corresponding inputs of a second diode bridge of the first rectifier means (23) wherein the poles of the latter second bridge are connected directly and via a capacitor to the opposite poles of the first bridge which are mutually connected via a capacitor to the respective inputs of the stabilizer means (24).

5. Device according to claim 4 **characterized in that** each capacitor of the first rectifier means (23) has a capacity of 2200 µF ±.20%.

6. Device according to any of the previous claims **characterized in that**, in, the primary and secondary inductances have respectively 800 and 1000 turns, and that the corresponding diameters of the respective windings are of 0,4 mm and 0,2 mm.

7. Device according to any of the previous claims **characterized in that** the positive poles of the accumulator means (3) and the stabilizer means (24) are connected through a diode biased toward the accumulator means (3).

8. Device according to any of the previous claims **characterized in that** the oscillator means (6) are of adjustable frequency type and are equipped with frequency adjusting elements (29) ranging between 20 Hz and 950 Hz.

## Patentansprüche

1. Energieerzeugungsvorrichtung umfassend Gleichstrom-Elektroakkumulatormittel (3), deren erste und zweite Anschlüsse über Spannungsbegrenzungsmittel (4) mit entsprechenden Eingängen von Oszillatormitteln (6) verbunden sind, die eine Mehrzahl von Ausgängen (10, 11) für periodische Signale mit entsprechenden Phasen aufweisen, die in einem Zeitbereich regelmäßig beabstandet sind; wobei die Vorrichtung eine Mehrzahl von Schaltmitteln (12) umfasst, die jeweils einen entsprechenden Eingangsanschluss für das Steuersignal aufweisen, die mit einem entsprechenden Ausgang (10, 11) der Oszillatormittel (6) verbunden ist, wobei jedes der Schaltmittel (12) ein entsprechendes zweipoliges Gatter umfasst und zum Öffnen und Schließen gesteuert wird durch das Signal an dem Eingangsanschluss, und weiterhin aufweist einen Pol, der mit dem ersten Anschluss des Akkumulatormittels (3), und den anderen Pol, der mit einem Anschluss einer entsprechenden Primärinduktivität (14, 15) eines Transformatormittels (16) verbunden ist, wobei der verbleibende Anschluss einer jeden Primärinduktivität (14, 15) mit dem zweiten Anschluss des Akkumulatormittels (3) verbunden ist; wobei für jede Primärinduktivität (14, 15) die Transformatormittel (16) mit einer entsprechenden Sekundärinduktivität (19, 20) ausgestattet sind, wobei diese Induktivitäten Magnetflüsse sind, die über eine Magnetschaltung (22) der Transformatormittel (16) verbunden sind, die Anschlüsse mindestens einer der Sekundärinduktivitäten (19) über ein erstes Gleichrichtermittel (23) und ein Stabilisierungsmittel (24) mit dem ersten und zweiten Pol des Akkumulatormittels (3) verbunden sind und die Anschlüsse mindestens einer der Sekundärinduktivitäten (19) mit einem entsprechenden Verbraucher (30) verbunden sind; und die Vorrichtung ist **dadurch gekennzeichnet, dass** die mindestens eine Sekundärinduktivität (20) mit dem jeweiligen Verbraucher (30) über ein zweites Gleichrichtermittel (28) verbunden ist, das ein Paar Diodenbrücken umfasst, wobei die Eingänge für die Wechselspannung parallel zu den Anschlüssen der Sekundärinduktivität (20) und die jeweiligen Ausgangspole in Reihe geschaltet sind, wobei jeder Eingang einer Brücke mit einem Eingang der anderen Brücke durch einen entsprechenden Kondensator verbunden ist und wobei die Ausgänge der vorgeschalteten Brücke durch einen jeweiligen Kondensator verbunden sind.

2. Vorrichtung gemäß Anspruch 1, **dadurch gekennzeichnet, dass** die Magnetschaltung (22) aus einem Stapel von eisenhaltigem Lagen oder aus einem oder mehreren Ferrit-Elementen gebildet ist.

3. Vorrichtung gemäß Anspruch 1 oder Anspruch 2, **dadurch gekennzeichnet, dass** die Magnetschaltung (22) Wickelarme für jedes Paar von Primär- (14, 15) und Sekundärinduktivitäten (19, 20), einen Zentralarm und Verbindungsarme der Enden des Zentralarms und der Wickelarme umfasst, wobei der Zentralarm einen magnetischen Spalt aufweist, der von einem Permanentmagnetmittel (27) eingenommen wird.

4. Vorrichtung gemäß einem der vorhergehenden Ansprüche, **dadurch gekennzeichnet, dass** die mindestens eine Sekundärinduktivität (19) mit den Eingängen für die Wechselspannung einer ersten Diodenbrücke des ersten Gleichrichtermittels (23) verbunden ist, die über jeweilige Kondensatoren mit den entsprechenden Eingängen einer zweiten Diodenbrücke des ersten Gleichrichtermittels (23) verbunden sind, wobei die Pole der letztgenannten zweiten Brücke direkt und über einen Kondensator mit den gegensätzlichen Polen der ersten Brücke verbunden sind, die beide über einen Kondensator mit den jeweiligen Eingängen des Stabilisierungsmittels (24) verbunden sind.

5. Vorrichtung gemäß Anspruch 4, **dadurch gekennzeichnet, dass** jeder Kondensator des ersten Gleichrichtermittels (23) eine Kapazität von 2200 µF ±.20% aufweist.

6. Vorrichtung gemäß einem der vorhergehenden Ansprüche, **dadurch gekennzeichnet, dass** die Primär- und Sekundärinduktivitäten jeweils 800 und 1000 Wicklungen aufweisen und dass die entsprechenden Durchmesser der jeweiligen Windungen 0,4 mm und 0,2 mm betragen.

7. Vorrichtung gemäß einem der vorhergehenden Ansprüche, **dadurch gekennzeichnet, dass** die positiven Pole des Akkumulatormittels (3) und des Stabilisierungsmittels (24) durch eine Diode verbunden sind, die in Richtung des Akkumulatormittels (3) vorgespannt ist.

8. Vorrichtung gemäß einem der vorhergehenden Ansprüche, **dadurch gekennzeichnet, dass** die Oszillatormittel (6) in ihrer Frequenz einstellbar und mit Frequenzeinstellelementen (29) im Bereich zwischen 20 Hz und 950 Hz ausgestattet sind.

## Revendications

1. Dispositif de génération de puissance comprenant un moyen d'accumulateur électrique à courant continu (3) dont des première et seconde bornes sont reliées par l'intermédiaire d'un moyen de limitation de tension (4) à des entrées respectives de moyens d'oscillateur (6) ayant une pluralité de sorties (10, 11) pour des signaux périodiques avec des phases respectives espacées régulièrement dans le domaine temporel ; ledit dispositif comprenant une pluralité de moyens de commutateur (12) ayant chacun un port d'entrée respectif pour le signal de commande relié à une sortie respective (10, 11) des moyens d'oscillateur (6), chacun desdits moyens de commutateur (12) comprenant une grille bipolaire respective et étant commandé en ouverture et en fermeture par le signal au port d'entrée et ayant un pôle relié à la première borne du moyen d'accumulateur (3) et l'autre pôle relié à une borne d'une inductance primaire respective (14, 15) d'un moyen de transformateur (16), la borne restante de chaque inductance primaire (14, 15) étant reliée à la seconde borne du moyen d'accumulateur (3) ; pour chaque inductance primaire (14, 15), le moyen de transformateur (16) comporte une inductance secondaire correspondante (19, 20), ces inductances étant des flux magnétiques reliés par l'intermédiaire d'un circuit magnétique (22) du moyen de transformateur (16), les bornes d'au moins une des inductances secondaires (19) étant reliées par l'intermédiaire d'un premier moyen de redresseur (23) et d'un moyen de stabilisateur (24) aux premier et second pôles du moyen d'accumulateur (3) et les bornes d'au moins une des inductances secondaires (19) étant reliées à une charge respective (30) ; ledit dispositif étant **caractérisé par le fait que** l'au moins une inductance secondaire (20) est reliée à la charge respective (30) par l'intermédiaire d'un second moyen de redresseur (28) comprenant une paire de ponts de diodes avec les entrées pour la tension CA reliées en parallèle aux bornes de l'inductance secondaire (20) et avec les pôles de sortie respectifs reliés en série, chaque entrée d'un pont étant reliée à une entrée de l'autre pont par un condensateur respectif, et les sorties du pont amont étant reliées par un condensateur respectif.

2. Dispositif selon la revendication 1, **caractérisé par le fait que** le circuit magnétique (22) est fait d'un empilement de tôles ferreuses ou d'un ou plusieurs éléments en ferrite.

3. Dispositif selon la revendication 1 ou la revendication 2, **caractérisé par le fait que** le circuit magnétique (22) a des branches d'enroulement pour chaque paire d'inductances primaire (14, 15) et secondaire (19, 20), une branche centrale et des branches de liaison des extrémités de la branche centrale et des branches d'enroulement, la branche centrale portant un espace magnétique occupé par un moyen d'aimant permanent (27).

4. Dispositif selon l'une quelconque des revendications précédentes, **caractérisé par le fait que** l'au moins une inductance secondaire (19) est reliée aux entrées pour la tension CA d'un premier pont de diodes du premier moyen de redresseur (23) reliées par l'intermédiaire de condensateurs respectifs aux entrées correspondantes d'un second pont de diodes du premier moyen de redresseur (23), les pôles du second pont étant reliés directement et par l'intermédiaire d'un condensateur aux pôles opposés du premier pont qui sont mutuellement reliés par l'intermédiaire d'un condensateur aux entrées respectives du moyen de stabilisateur (24).

5. Dispositif selon la revendication 4, **caractérisé par le fait que** chaque condensateur du premier moyen de redresseur (23) a une capacité de 2200 µF ± 20 %.

6. Dispositif selon l'une quelconque des revendications précédentes, **caractérisé par le fait que** les inductances primaire et secondaire ont respectivement 800 et 1000 spires, et **par le fait que** les diamètres correspondants des enroulements respectifs sont de 0,4 mm et 0,2 mm.

7. Dispositif selon l'une quelconque des revendications précédentes, **caractérisé par le fait que** les pôles positifs du moyen d'accumulateur (3) et du moyen de stabilisateur (24) sont reliés par l'intermédiaire d'une diode polarisée vers le moyen d'accumulateur (3).

8. Dispositif selon l'une quelconque des revendications précédentes, **caractérisé par le fait que** les moyens d'oscillateur (6) sont du type à fréquence ajustable et sont équipés d'éléments d'ajustement de fréquence (29) allant de 20 Hz à 950 Hz.
